(19) Europäisches Patentamt
European Patent Office
Office européen des brevets

(11) **EP 2 305 959 A2**

(12) **EUROPÄISCHE PATENTANMELDUNG**

(43) Veröffentlichungstag:
**06.04.2011 Patentblatt 2011/14**

(51) Int Cl.:
*F01D 17/02* (2006.01)   *F01D 21/00* (2006.01)
*F02C 6/12* (2006.01)   *G01M 15/14* (2006.01)

(21) Anmeldenummer: **10176382.9**

(22) Anmeldetag: **13.09.2010**

(84) Benannte Vertragsstaaten:
**AL AT BE BG CH CY CZ DE DK EE ES FI FR GB
GR HR HU IE IS IT LI LT LU LV MC MK MT NL NO
PL PT RO SE SI SK SM TR**
Benannte Erstreckungsstaaten:
**BA ME RS**

(30) Priorität: **15.09.2009   DE 102009041541**

(71) Anmelder: **Continental Automotive GmbH
30165 Hannover (DE)**

(72) Erfinder:
• **Kaufmann, Andre
  88255 Baienfurt (DE)**
• **Reuter, Stefan
  93047 Regensburg (DE)**

(54) **Verfahren zur Untersuchung des dynamischen Betriebsverhaltens eines Abgasturboladers**

(57)    Die vorliegende Erfindung betrifft ein Verfahren zur Untersuchung des dynamischen Betriebsverhaltens eines Abgasturboladers 18 für einen Verbrennungsmotor, mit den Schritten: Vorgeben eines definierten Heißgasmassenstroms, der definierte zeitabhängige Druckpulsationen aufweist, Betreiben einer Turbine 5 des Abgasturboladers 18 mittels des druckpulsierenden Heißgasmassenstromes in verbrennungsmotorrelevanten Betriebsbereichen, Ermittlung von Messgrößen des mittels des Heißgasmassenstromes betriebenen Abgasturboladers 18, wobei die Messgrößen in definierten Zeitfenstern ermittelt werden, Bestimmung eines momentanen Wirkungsgrades der Turbine 5 anhand der ermittelten Messgrößen, Bestimmung einer momentanen Schnelllaufzahl der Turbine 5 anhand der ermittelten Messgrößen und Erstellung eines momentanen Turbinenkennfeldes. Die Erfindung bezieht sich ferner auf eine Vorrichtung 1 zur Durchführung eines solchen Verfahrens.

FIG 1

## Beschreibung

Die vorliegende Erfindung bezieht sich auf ein Verfahren zur Untersuchung des dynamischen Betriebsverhaltens eines Abgasturboladers. Die Erfindung bezieht sich ferner auf eine Vorrichtung zur Durchführung eines solchen Verfahrens.

Die DE 10 2007 018 618 A1 beschreibt den Aufbau eines Abgasturboladers für einen Verbrennungsmotor eines Kraftfahrzeugs, der im Wesentlichen aus einer Radialturbine mit einem Turbinenrad, welches vom Abgasstrom des Verbrennungsmotors angetrieben wird, und einem im Ansaugtrakt des Verbrennungsmotors angeordneten Radialverdichter mit einem Verdichterrad, das durch eine Turboladerwelle drehfest mit dem Turbinenrad verbunden ist, besteht. Solche Turbolader werden im Allgemeinen zur Leistungssteigerung und Hubraumreduzierung ("Downsizing") von Verbrennungsmotoren eingesetzt.

In der Entwicklung von turboaufgeladenen Verbrennungsmotoren stellt die Motorprozesssimulation ein wichtiges Entwicklungshilfsmittel dar. Hierbei stellt insbesondere die Entwicklungstendenz hin zu turboaufgeladenen Verbrennungsmotoren mit kleinem Hubraum ("Downsizing") in Kombination mit der so genannten Stoßaufladung, welche, aufgrund der Lastpunktverschiebung des Verbrennungsmotors, zu einer deutlichen Reduktion des Kraftstoffverbrauchs und damit der Kohlendioxid-Emission führt, die Motorprozesssimulation vor große Herausforderungen. Die Turbine wird bei stark pulsierender Beaufschlagung bei der Stoßaufladung häufig außerhalb der Betriebspunkte betrieben, welche an einem stationären Heißgasprüfstand nicht untersucht werden können.

Mittels stationär an einem Heißgasprüfstand ermittelter Turbinenkennfelder werden in Abhängigkeit des momentan anliegenden Druckverhältnisses und der Eintrittstemperatur der drehzahlabhängige Turbinenmassenstrom, der Turbinenwirkungsgrad und die resultierende Turbinenleistung für jeden Zeitschritt berechnet. Der standardmäßig experimentell ermittelte stationäre Turbinenwirkungsgrad beschränkt sich jedoch nur auf einen kleinen Ausschnitt des im Betrieb des Verbrennungsmotors verwendeten Kennfeldbereiches des Turboladers. Grund dafür ist die begrenzte Leistungsabnahme des Verdichters am stationären Heißgasprüfstand.

Der maximale Volumenstrom des Verdichters ist in der Regel durch den Querschnitt am Verdichtereintritt begrenzt. Erreicht die Luft im Verdichterradeintritt die Schallgeschwindigkeit, so ist kein weiteres Anwachsen des Volumendurchsatzes mehr möglich. Die Stopfgrenze ist erreicht. Da die Verdichterleistung direkt proportional zu dem Verdichtermassenstrom ist, ist die maximale Verdichterleistung und damit die minimale Schnelllaufzahl begrenzt. Im Betrieb mit einem Verbrennungsmotor kann der Abgasturbolader aufgrund der Massenträgheit seiner sich drehenden Bauteile auftretenden Druckspitzen nur zeitverzögert folgen, wodurch sich kurzzeitig sehr niedrige oder hohe Schnelllaufzahlen einstellen. Als Schnelllaufzahl ist hier das Verhältnis der Umfangsgeschwindigkeit am Turbineneintritt zu der isentropen Geschwindigkeit am Turbineneintritt bezeichnet. Da bei hohen Druckverhältnissen und somit niedrigen Schnelllaufzahlen die meiste Energie übertragen wird, müssen diese Bereiche zusätzlich gewichtet werden. Die an stationären Heißgasprüfständen ermittelten Turbinenkennfelder können aufgrund der beschränkten Leistungsabnahme des Verdichters allerdings nur begrenzt untersucht werden. Um die Turbine bei niedrigen Schnelllaufzahlen untersuchen zu können, muss die Laderdrehzahl bei einem hohen Turbinendruckverhältnis reduziert werden. Die dazu benötigte Leistung kann von einem Verdichter üblicherweise nicht abgegriffen werden. Besonders bei niedrigen Motordrehzahlen wird die Turbine des Abgasturboladers größtenteils außerhalb des am stationären Heißgasprüfstand ermittelten Turbinenkennfeldes betrieben.

Die Motorprozesssimulation muss daher das stationär ermittelte Turbinenkennfeld in den Bereich hoher und niedriger Schnelllaufzahlen extrapolieren. Dieser Vorgang führt zu erheblichen Fehlern in der Simulation. Zusätzlich sind für die Entwicklung von innovativen Turbinen Messungen in motorrelevanten Bereichen notwendig.

Es existieren Ansätze, Turbinenwirkungsgrade bei hohen und besonders bei niedrigen Schnelllaufzahlen an stationären Heißgasprüfständen zu untersuchen. Diese Untersuchungen beruhen prinzipiell darauf, dass die Leistungsabnahme der Turbine erhöht wird, um bei hohen Turbinendruckverhältnissen die Turboladerdrehzahl zu reduzieren. Dies kann mittels eines Dynamometers, unterschiedlich großen Verdichterrädern oder indem der Verdichtermassenstrom im Kreis gefördert wird, erfolgen. Problematisch an diesen Ansätzen ist zunächst, dass dadurch der Turbolader in seiner Funktionalität verändert wird und damit nicht mehr einem Turbolader im eigentlichen Sinn entspricht, welcher im realen Betrieb eines Verbrennungsmotors eingesetzt wird. Weiterhin ist bei diesen Ansätzen der mechanische Wirkungsgrad der Turbine schwer abzuschätzen, der zur Bestimmung des Turbinenwirkungsgrades gebraucht wird. Durch veränderte Axialschübe gehen zusätzliche Fehler ein. Ferner ist der Betrieb mit einem Dynamometer sowohl durch die Turboladerdrehzahl als auch durch die Turbineneintrittstemperatur begrenzt und das Wechseln des Verdichterrades zum Einsatz von Verdichterrädern mit unterschiedlichen Durchmessern ist mit erheblichem Aufwand verbunden.

Dies gilt es verständlicherweise zu vermeiden.

Vor diesem Hintergrund liegt der vorliegenden Erfindung die Aufgabe zugrunde, ein verbessertes Verfahren zur Untersuchung des dynamischen Betriebsverhaltens eines Abgasturboladers zur Verfügung zu stellen.

Diese Aufgabe wird erfindungsgemäß durch ein Verfahren mit den Merkmalen des Patentanspruchs 1 und/oder durch eine Vorrichtung mit den Merkmalen des Patentanspruchs 11 gelöst.

Demgemäß ist vorgesehen:

Ein Verfahren zur Untersuchung des dynamischen Betriebsverhaltens eines Abgasturboladers für einen Verbrennungsmotor,

mit den Schritten: Vorgeben eines definierten Heißgasmassenstroms, der definierte zeitabhängige Druckpulsationen aufweist, Betreiben einer Turbine des Abgasturboladers mittels des druckpulsierenden Heißgasmassenstromes in verbrennungsmotorrelevanten Betriebsbereichen, Ermittlung von Messgrößen des mittels des Heißgasmassenstromes betriebenen Abgasturboladers, wobei die Messgrößen in definierten Zeitfenstern ermittelt werden, Bestimmung eines momentanen Wirkungsgrades der Turbine anhand der ermittelten Messgrößen, Bestimmung einer momentanen Schnelllaufzahl der Turbine anhand der ermittelten Messgrößen und Erstellung eines momentanen Turbinenkennfeldes.

Eine Vorrichtung, insbesondere Messleitstand, zur Durchführung des erfindungsgemäßen Verfahrens, mit: Einer Heißgaserzeugungseinrichtung, die einen definierten Heißgasmassenstrom, der definierte zeitabhängige Druckpulsationen aufweist, erzeugt, einer Testeinrichtung, die die Turbine mittels des definierten druckpulsierenden Heißgasmassenstromes in verbrennungsmotorrelevanten Betriebsbereichen betreibt, einer Messeinrichtung, die in definierten Zeitfenstern Messgrößen des mittels des Heißgasmassenstromes betriebenen Abgasturboladers ermittelt und einer Auswerteeinrichtung, die einen momentanen Wirkungsgrad der Turbine, eine momentane Schnelllaufzahl und ein momentanes Kennfeld der Turbine anhand der Messgrößen bestimmt.

Die der vorliegenden Erfindung zugrunde liegende Idee besteht nun unter anderem darin, die Turbine eines Abgasturboladers mit einem Heißgasstrom zu betreiben, der definierte zeitabhängige Druckpulsationen aufweist. Hierdurch ist es möglich, die Turbine in verbrennungsmotorrelevanten Betriebsbereichen zu betreiben. Durch das Betreiben der Turbine an einem druckpulsierenden Heißgasmassenstrom ist bei jedem Druckanstieg an der Turbine von der Turbine nicht nur die erforderliche Verdichterleistung, sondern auch eine Beschleunigungsleistung zur Beschleunigung eines Läufers des Abgasturboladers zu erbringen. Als Läufer des Abgasturboladers werden im Folgenden die drehenden Teile des Abgasturboladers, wie Verdichterrad, Turbinenrad und eine das Turbinenrad und das Verdichterrad drehfest verbindende Läuferwelle verstanden.

Durch die Ermittlung von Messgrößen des Abgasturboladers in definierten Zeitfenstern ist es nun möglich, die Turbine des Turboladers instationär zu vermessen. Durch die Bestimmung eines momentanen Wirkungsgrades der Turbine und einer momentanen Schnelllaufzahl der Turbine kann somit ein instationäres Turbinenkennfeld erstellt werden.

Vorteilhafte Ausgestaltungen und Weiterbildungen der vorliegenden Erfindung ergeben sich aus den weiteren Unteransprüchen und aus der Beschreibung in Zusammenschau mit den Figuren der Zeichnung.

In einer bevorzugten Ausgestaltung der vorliegenden Erfindung werden in einem quasistationären Betriebszustand der Turbine die Messgrößen lediglich während eines durch den druckpulsierenden Heißgasmassenstrom an einem Eintritt der Turbine erzeugten Druckplateaus ermittelt. Durch die Abstimmung des Zeitfensters der Messgrößenerfassung und des Zeitfensters des quasi-stationäre Zustandes durch den druckpulsierenden Heißgasmassenstrom in der Turbine, ist es komfortabel möglich, das Betriebsverhalten des Abgasturboladers quasistationär zu bestimmen. Hierdurch wird die Berechnung des momentanen Wirkungsgrades und der momentanen Schnelllaufzahl möglich.

In einer typischen Ausgestaltung der vorliegenden Erfindung werden zum Erzeugen realistischer Betriebsbedingungen der Turbine Frequenzen und/oder Amplituden und/oder Form der Druckpulsationen des Heißgasmassenstromes mittels eines Impulserzeugers erzeugt. Dadurch wird der Betrieb des Abgasturboladers mit Frequenzen und/oder Amplituden, welche denen eines Verbrennungsmotors entsprechen ermöglicht. Hierdurch werden realistische Betriebsbedingungen in der Turbine des Turboladers erreicht.

In einer ebenso bevorzugten Ausgestaltung der vorliegenden Erfindung weist der Turbolader einen Verdichter und einen Läufer auf und der momentane Turbinenwirkungsgrad ist als Verhältnis zwischen einer tatsächlichen Turbinenleistung und einer isentropen Turbinenleistungen definiert, wobei die tatsächliche Turbinenleistung eine Beschleunigungsleistung zur Beschleunigung des Läufers und eine Verdichterleistung des Verdichters umfasst. Hierdurch ist es möglich, die Turbine auch bei Turbinendruckverhältnisses zu betreiben, bei denen in einem stationären Heißgasprüfstand die maximale Verdichterleistung erreicht werden würde. Dies ermöglicht die Bestimmung der gewünschten Kenngrößen der Turbine in verbrennungsmotorrelevanten Betriebsbereichen.

In einer weiteren bevorzugten Ausgestaltung der vorliegenden Erfindung ist als eine erste Messgröße eine an der Turbine gemessene momentane Turbineneintrittstemperatur und/oder momentanen statischer Turbinenaustrittsdruck vorgesehen. Hierdurch ist es möglich, mittels eines einfach aufgebauten Messaufbaus die Turbineneintrittstemperatur und den Turbinenaustrittsdruck zu ermitteln.

In einer typischen Ausgestaltung der vorliegenden Erfindung wird ein momentaner Turbinenmassenstrom mittels einer Messdüse ermittelt, welche an einem Eintritt der Turbine angeordnet ist, wobei der Turbinenmassenstrom unter Verwendung eines sich über die Messdüse einstellenden Druckgefälles ermittelt wird. Hierdurch kann eine Querschnittsreduzierung von einer Heißgasleitung der Heißgaserzeugungseinrichtung auf einen Eingangsquerschnitt der Turboladerturbine zur Bestimmung des Turbinenmassenstromes verwendet werden. Dies vereinfacht den Messaufbau.

In einer ebenso bevorzugten Ausgestaltung der vorliegenden Erfindung der vorliegenden Erfindung weist der Abgasturbolader einen Verdichter mit einem Verdichterrad auf und wird als eine zweite Messgröße eine an dem Verdichter gemessene momentane Drehzahl des Verdichterrades bestimmt. Somit kann die momentane Drehzahl des Läufers des Turboladers an dem thermisch nicht belasteten Verdichter abgenommen werden. Ein thermischer Schutz des Drehzahlsensor ist daher nicht erforderlich. Hierdurch reduzieren sich die Investitionskosten für die erfindungsgemäße Vorrichtung.

In einer weiteren Ausgestaltung der vorliegenden Erfindung wird ein Kennfeld des Verdichters stationär bestimmt und eine momentane Verdichterleistung wird entsprechend der gemessenen momentanen Drehzahl des Verdichterrades und/oder dem momentanen Verdichteraustrittsdruck aus dem Kennfeld interpoliert. Hierdurch ist es möglich, anhand der ermittelten momentanen Drehzahl schnell und komfortabel das entsprechende Verdichterdruckverhältnis aus dem Kennfeld zu interpolieren. Hierdurch wird das erfindungsgemäße Verfahren vereinfacht und beschleunigt.

In einer bevorzugten Ausgestaltung der vorliegenden Erfindung werden zur Bestimmung des Kennfeldes dritte Messgrößen an dem Verdichter ermittelt, wobei zumindest eine stationäre Austrittstemperatur, ein stationärer oder momentaner Verdichteraustrittsdruck, eine stationäre Verdichtereintrittstemperatur, ein stationärer Verdichtereintrittsdruck und ein stationärer Verdichtermassenstrom ermittelt werden. Anhand dieser Kenngrößen ist mit verhältnismäßig geringem Aufwand ein stationäres Verdichterkennfeld ermittelbar.

In einer typischen Ausgestaltung der vorliegenden Erfindung werden zur Bestimmung des momentanen Turbinenwirkungsgrades und der momentanen Schnelllaufzahl der Turbine die Messgrößen automatisiert ausgewertet. Dadurch wird eine beschleunigte Auswertung und Darstellung der ermittelten Daten ermöglicht.

In einer weiteren bevorzugten Ausgestaltung der vorliegenden Erfindung weist die Heißgaserzeugungseinrichtung eine Brennkammer zur Erzeugung von Heißgas, einen Impulserzeuger zur Erzeugung der variablen Druckpulsationen und einen zwischen der Brennkammer und dem Impulserzeuger angeordneten Impulsdämpfer zur Absicherung der Brennkammer gegen die Druckpulsationen des Impulserzeugers und zur Erzeugung quasi-stationärer zustände an einem Eintritt der turbine während eines Druckstoßes auf. Hierdurch ist es möglich einen konstanten Heißgasmassestrom derart mit einer Druckpulsation zu beaufschlagen, dass verbrennungsmotorähnliche Bedingungen an dem Eintritt der Turbine geschaffen werden. Zusätzlich dient das Volumen des Impulsdämfers der Erzeugung quasi-stationärer Zustände am Eintritt der Turbine bei gleichzeitig niedrigen Schnelllaufzahlen. Mit Hilfe von geeigneten Kombinationen von Drosselstellen in dem Impulsdämpfer können die Druckniveaus angepasst werden.

In einer weiteren bevorzugten Ausgestaltung der vorliegenden Erfindung weist die Testeinrichtung eine Heißgasleitung auf, über welche das Heißgas von der Brennkammer über den Impulsdämpfer und über den Impulserzeuger zu der Turbine leitbar ist. Hierdurch können die einzelnen Komponenten der Heißgaserzeugungseinrichtung nahezu beliebig zueinander orientiert und beabstandet voneinander angeordnet werden. Dies ermöglich einen flexiblen Aufbau der erfindungsgemäßen Vorrichtung.

In einer weiteren bevorzugten Ausgestaltung der vorliegenden Erfindung weist die Auswerteeinrichtung eine Recheneinheit auf. Hierdurch können die erhaltenen Messwerte direkt von der erfindungsgemäßen Vorrichtung ohne ein Zusatzsystem zur Datenverarbeitung ausgewertet werden.

Die obigen Ausgestaltungen und Weiterbildungen lassen sich - sofern sinnvoll - auf beliebige Weise miteinander kombinieren.

Die vorliegende Erfindung wird nachfolgend anhand der in den schematischen Figuren der Zeichnung angegebenen Ausführungsbeispiele näher erläutert. Es zeigen dabei:

Fig. 1    die zeitlich verzögerte Erhöhung der Läuferdrehzahl bei einem stoßartigen Anstieg des Druckes an einem Eintritt einer Turbine.

Fig. 2A    den Aufbau einer erfindungsgemäßen Vorrichtung zur Durchführung eines erfindungsgemäßen Verfahrens zur Untersuchung des dynamischen Betriebsverhaltens eines Abgasturboladers;

Fig. 2B    den Druckverlauf entlang einer Längsrichtung der erfindungsgemäßen Vorrichtung;

Fig. 2C    den Verlauf eines Druckstoßes über der Zeit;

Fig. 3    einen Messaufbau zur Ermittlung von Messgrößen an einem Abgasturbolader;

Fig. 4A    einen Messaufbau zur Ermittlung einer momentanen Turbineneintrittstemperatur;

Fig. 4B    zeigt Temperaturübertragungsfunktionen von Thermoelementen des in Fig. 4A dargestellten Messaufbaus;

Fig. 5      die schrittweise Durchführung des erfindungsgemäßen Verfahrens; und

Fig. 6      die Vorgehensweise zur Ermittlung der Messgrößen des Turboladers und der Berechnung charakteristischer Kenngrößen der Turbine.

In den Figuren der Zeichnung sind - sofern nichts anderes ausgeführt ist - gleiche Bauteile, Elemente und Merkmale mit denselben Bezugszeichen versehen worden.

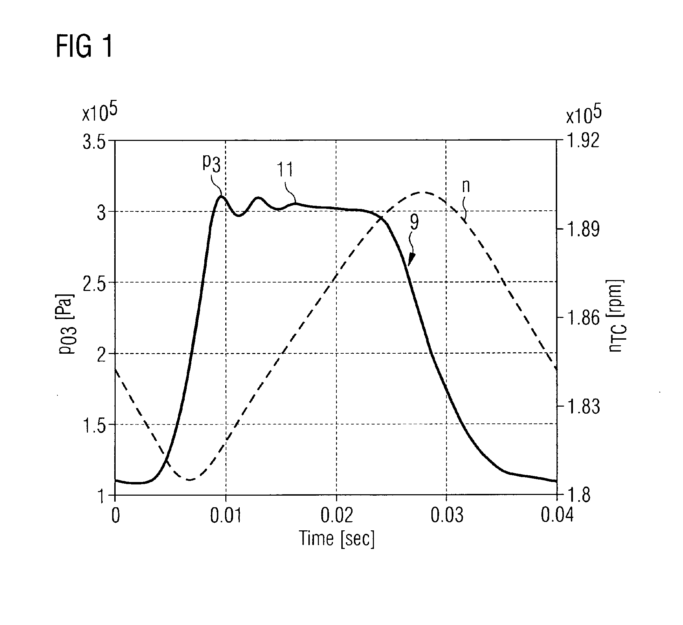

Fig. 1 illustriert die zeitlich verzögerte Erhöhung der Läuferdrehzahl bei einem stoßartigen Anstieg des Druckes an einem Eintritt einer Turbine.

Fig. 1 zeigt zunächst eine durch eine pulsierende Strömung erzeugte Druckpulsation 9 mit einem Druckplateau 11. Ein Druck $p_3$ steigt zunächst in Fig. 1 von links kommend steil an, geht in ein Druckplateau 11 über und fällt anschließend wider ab.

Aufgrund seiner Massenträgheit kann der Turbinenläufer mit seiner Drehzahl n dem stoßartig steigenden Leistungsangebot der pulsierenden Strömung nur verzögert folgen. Fig. 1 zeigt deutlich die zeitliche Verzögerung der Drehzahlzunahme der Drehzahl n während des Druckstoßes 9. Hierdurch werden niedrige Schnellaufzahlen erreicht.

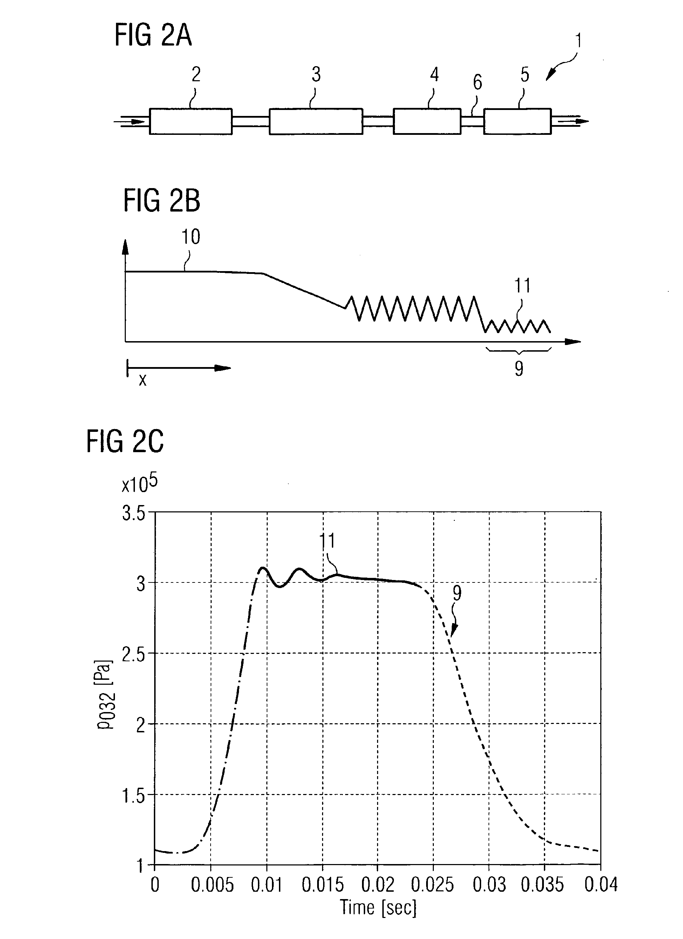

Fig. 2A zeigt den Aufbau einer erfindungsgemäßen Vorrichtung zur Durchführung eines erfindungsgemäßen Verfahrens zur Untersuchung des dynamischen Betriebsverhaltens eines Abgasturboladers. Fig. 2B zeigt den Druckverlauf entlang einer Längsrichtung der erfindungsgemäßen Vorrichtung. Fig. 2C zeigt den Verlauf eines Druckstoßes über der Zeit.

Die Vorrichtung 1 weist eine Brennkammer 2, einen der Brennkammer 2 nachfolgend angeordneten Impulsdämpfer 3, welcher als System von Volumen und Blenden ausgebildet ist, und einen dem Impulsdämpfer 3 nachgeordneten Impulserzeuger 4 auf. Die Brennkammer 2, der Impulsdämpfer 3 und der Impulserzeuger 4 sind über eine Heißgasleitung 6 mit einer Turbine 5 eines Abgasturboladers koppelbar.

Die Brennkammer 2 erzeugt durch Verbrennung eines Brennstoffes, beispielsweise Erdgas, ein Heißgas mit einem konstanten Massenstrom. Dieser Heißgasmassenstrom wird über den Impulsdämpfer 3 dem Impulserzeuger 4 zugeführt. Der Impulserzeuger 4 ist z.B. als Zylinderkopf eines Verbrennungsmotors ausgeführt. Hierbei wird zwei Zylindern des Zylinderkopfes der konstante Heißgasmassenstrom zugeführt. Die Einlassventile der Zylinder sind geschlossen. Die Auslassventile der Zylinder sind über eine, mittels eines Elektromotors angetriebene Nockenwelle ansteuerbar. Über die Drehzahl des Elektromotors lässt sich somit an dem Heißgasmassenstrom eine Druckpulsation mit breitem Frequenzband einstellen. Dieser Aufbau des Impulserzeugers 4 ist sehr einfach und robust, wobei Ersatzteile erforderlichenfalls leicht beschafft werden können. Weiterhin ist es mit einem derartigen Impulserzeuger 4 möglich, an der Turbine 5 Betriebsbedingungen zu erzeugen, welche denen eines Verbrennungsmotors ähneln.

Der Impulsdämpfer 3 dient dabei dazu, die im Bezug auf Druckpulsationen sehr empfindliche Brennkammer 2 gegen die vom Pulserzeuger 4 erzeugten Druckpulsationen abzusichern. Hierdurch wird zuverlässig verhindert, dass die Verbrennung in der Brennkammer 2 erlischt. Zusätzlich wird das Volumen des Impulsdämpfers 3 zur Erzeugung der für das erfindungsgemäße Verfahren notwendigen quasi-stationären Zustände benötigt.

Von dem Impulserzeuger 4 wird der druckpulsierende Heißgasmassenstrom der Turbine 5 eines Abgasturboladers zugeführt. Der schematisch dargestellte Druckverlauf 10 in einer Längsrichtung x der Vorrichtung 1 zeigt den Verlauf der Druckschwankungen bzw. Druckstöße 9 in einem Eintritt der Turbine 5 des Abgasturboladers. Die Frequenz, die Amplitude und die Form der Druckschwankungen 9 kann dabei über den Impulserzeuger 4 in Kombination mit dem Impulsdämpfer 3 eingestellt werden. Fig. 2B zeigt die Druckschwankungen 9 vereinfacht nur mit einer steigenden und einer abfallenden Flanke. Fig. 2C zeigt in einer detaillierten Ansicht den Verlauf eines Druckstoßes 9, wobei der steigenden Flanke ein Druckplateau 11 folgt. Das Druckplateau 11 wird mittels des Volumens des Impulsdämpfers 3 ermöglicht. Dieses verhindert, nachdem der Impulserzeuger 4 einen Druckanstieg erzeugt hat, ein sofortiges Abfallen des Druckes indem das Volumen des Impulsdämpfers 3 als Gasspeicher wirkt, aus welchem Gas in den Impulserzeuger 4 nachströmt.

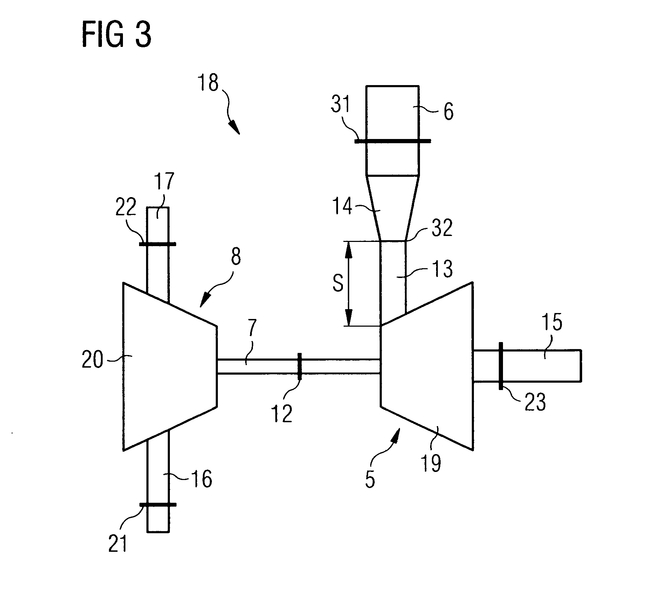

Fig. 3 zeigt einen Messaufbau zur Ermittlung von Messgrößen an einem Abgasturbolader.

Fig. 3 zeigt zunächst die Turbine 5 eines Abgasturboladers 18, wobei ein Turbinenrad 19 über eine Läuferwelle 7 mit einem Verdichterrad 20 eines Verdichters 8 des Abgasturboladers 18 drehfest gekoppelt ist. Weiterhin weist der Messaufbau einen Verdichtereinlauf 16 mit einer Messstelle 21 auf. In einem Verdichterauslauf 17 ist eine Messstelle 22 vorgesehen. Ein Turbineneinlauf 13 der Turbine 5 ist über eine Messdüse 14 mit der Heißgasleitung 6 gekoppelt. Das Durchmesserverhältnis zwischen der Heißgasleitung 6 und des Turbineeintritts 13 liegt üblicherweise zwischen 0,4 und 0,6. Dieser Querschnittssprung kann vorteilhaft mittels der Messdüse 14 überbrückt werden. In der Heißgasleitung 6 ist vor der Messdüse eine Messstelle 31 vorgesehen und an einem Ausgang der Messdüse ist eine Messstelle 32 vorgesehen. Ein Turbinenauslauf 15 weist eine Messstelle 23 auf. Eine Lauflänge s bezeichnet die Länge von dem Austritt der Messdüse 14 zu einem Eintritt der Turbine 5. Zur Bestimmung der Drehzahl der drehenden Bauteile des Turboladers, des so genannten Läufers 7, 19, 20, welcher ein Turbinenrad 19, eine Läuferwelle 7 und ein Verdichterrad 20 aufweist, dient eine Messstelle 12. Zur Bestimmung der Läuferdrehzahl wird beispielsweise ein Schaufelzähler eingesetzt.

Der momentane Turbinenwirkungsgrad ist als Verhältnis zwischen einer tatsächlichen Turbinenleistung und einer isentropen Turbinenleistung definiert, wobei die tatsächliche Turbinenleistung eine Beschleunigungsleistung zur Beschleunigung eines Läufers 7, 19, 20 des Abgasturboladers 18 und eine Verdichterleistung des Verdichters 8 umfasst.

Als momentane Schnelllaufzahl der Turbine 5 wird das Verhältnis der Umfangsgeschwindigkeit an einem Eintritt des Turbinenrades 19 $u_4$ zu einer isentropen Geschwindigkeit $c_s$ am Eintritt des Turbinenrades 19 bezeichnet.

Da der Läufer 7, 19, 20 des Abgasturboladers 18 ein gewisses Massenträgheitsmoment besitzt, ist bei einem Betrieb der Turbine 5 mit einem druckpulsierenden Heißgasmassenstrom neben einer Verdichterleistung des Verdichters 8 auch eine Beschleunigungsleistung zur Beschleunigung des Läufers 7, 19, 20 erforderlich.

Hierdurch ist es möglich, den Abgasturbolader 18 in verbrennungsmotorrelevanten Betriebsbereichen mit hohen und niedrigen Turbinendruckverhältnisses zu betreiben und ein instationäres Turbinenkennfeld zu ermitteln. Hierzu ist es erforderlich, einen momentanen Turbinenwirkungsgrad und eine momentane Schnelllaufzahl der Turbine 5 während eines Druckstoßes am Eintritt der Turbine 5 zu ermitteln. Erfindungsgemäß werden hierzu auf einer - in Fig. 2C dargestellten - steigenden Flanke folgend zahlreiche Messgrößen während des quasistationären Zustandes in dem Druckplateau 11 sehr schnell ermittelt. Während des Plateaus 11 befindet sich der Turbolader 18 während einem kurzen Zeitfenster in einem quasistationärem Betriebszustand. Die Ermittlung der Messgrößen erfolgt dabei in diesem Zeitfenster.

Die Vorgehensweise zur Ermittlung des instationären Betriebsverhaltens des Turboladers 18 wird im Folgenden beschrieben:

Zunächst wird ein Kennfeld des Verdichters 8 stationär ermittelt. Dazu wird der Turbolader 18 an einem Heißgasprüfstand mit einem konstanten Heißgasmassenstrom betrieben. An der Messstelle 21 werden die stationären Messgrößen Verdichtermassenstrom $\frac{dm}{dt}_v$, Verdichtereingangsdruck $p_1$ und Verdichtereintrittstotaltemperatur $T_{01}$ ermittelt. Die Messstelle 22 dient zur Ermittlung einer stationären Verdichteraustrittstotaltemperatur $T_{02}$ und eines stationären Verdichteraustrittsdruckes $p_2$. Anhand dieser Messgrößen wird ein stationäres Kennfeld des Verdichters 8 erstellt. Die Verdichterleistung wird dabei aus dem Verdichterwirkungsgrad, dem Verdichterdruckverhältnis, der Verdichtereintrittstemperatur und dem Verdichtermassenstrom ermittelt. Der Verdichterwirkungsgrad wird aufgrund des Wärmeeintrages von der Turbine 5 korrigiert. Ein momentanes Verdichterdruckverhältnis in einem instationären Betrieb des Turboladers 18 mit einem druckpulsierenden Heißgasmassenstrom wird entsprechend der an der Messstelle 12 ermittelten momentanen Drehzahl des Abgasturboladers 18 $N_{ATL}(t)$ aus dem stationären Verdichterkennfeld interpoliert. Zusätzlich kann der statische Austrittsdruck $p_2$ schnell ermittelt werden, um die Schwankungen des Verdichterbetriebspunktes definierter feststellen zu können.

Im instationären Betrieb des Abgasturboladers 18 an dem pulsierenden Heißgasmassenstrom führt die Heißgasleitung 6 das Heißgas über die Düse 14 bzw. eine Querschnittsverengung 14 dem Turbineneinlauf 13 zu. Die Notwendigkeit der Querschnittsverengung 14 ergibt sich zunächst aus den technisch bedingten Querschnittsunterschieden zwischen der Heißgasleitung 6 und dem Turbineneinlauf 13. Die Messstelle 31 dient der Ermittlung eines Staudruckes $p_{031}(t)$. Unmittelbar nach der Messdüse 14 ist die Messstelle 32 zur Ermittlung eines statischen Druckes $p_{32}(t)$ und einer Temperatur $T_{032}$ vorgesehen.

In dem Turbinenauslauf 15 ist die Messstelle 23 zur Ermittlung eines statischen Druckes $p_4(t)$ vorgesehen. Zur Berechnung der momentanen isentropen Turbinenleistung werden die zeitlich schwankenden Werte von Turbinendruckverhältnis (total-statisch) $PR_{T\text{-}ts}$, welches als Verhältnis $p_{032}/p_4$ definiert ist, Turbinenmassenstrom $\frac{dm}{dt}_T(t)$ und Turbineneintrittstemperatur (total) $T_{032}$ benötigt. Der momentane Turbinenmassenstrom $\frac{dm}{dt}_T(t)$ wird mit Hilfe der Messdüse 14 ermittelt. Die notwendigen Totaldrücke $p_{031}$ und $p_{032}$ an den Messstellen 31 und 32 werden mittels der gemessenen Staudrücke $p_{031}$ und $p_{32}$ iterativ ermittelt. Zur Anpassung einer Phase $\varphi$ zwischen den gemessenen Parametern zur Berechnung der isentropen Turbinenleistung und des Heißgases, welches im Schaufelkanal der Turbine Leistung umsetzt ist die Lauflänge s zwischen der Massenstrommessstelle 32 und dem Turbineneintritt zu berücksichtigen. Druckwellen breiten sich mit einer örtlichen Schallgeschwindigkeit a, Masse mit einer lokalen Strömungsgeschwindigkeit V aus. Aus der lokalen Strömungsgeschwindigkeit und der Lauflänge s ergibt sich die Phasenverschiebung zwischen der isentropen und der tatsächliche Turbinenleistung:

$$\varphi = \frac{s}{v}$$

Zur Berechnung der isentropen Geschwindigkeit $c_s$, die zur Berechnung der Schnelllaufzahl benötigt wird, wird von den ermittelten Messgrößen die Totaltemperatur $T_{032}$ am Turbineneintritt und das Turbinendruckverhältnis $PR_{T\text{-}ts}$ herangezogen. Auch diese müssen phasenkorrigiert werden.

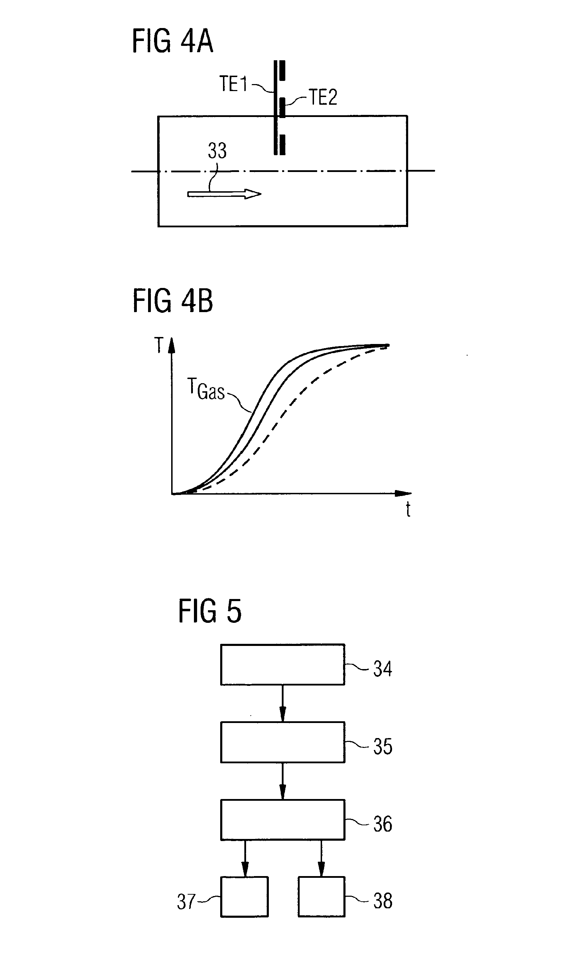

Fig. 4A zeigt einen Messaufbau zur Ermittlung einer momentanen Turbineneintrittstemperatur. Fig. 4B zeigt Temperaturübertragungsfunktionen von Thermoelementen des in Fig. 4A dargestellten Messaufbaus

Fig. 4A zeigt zunächst den Messaufbau mit zwei Thermoelementen TE1 und TE2 und Fig. 4B zeigt die zugehörigen Temperaturübertragungsfunktionen. Die momentane Turbineneintrittstemperatur (total) $T_{032}$ ist mittels der in einem Heißgasstrom 33 angeordneten Thermoelemente TE1 und TE2 ermittelbar. Die Thermoelemente TE1 und TE2 weisen ein unterschiedliches Ansprechverhalten bzw. unterschiedliche Zeitkonstanten auf.

Die Thermoelemente TE1 und TE2 messen aufgrund ihrer benachbarten Anordnung im Heißgasstrom 33 näherungsweise dieselbe Gastemperatur. Aus dem Verhältnis ihrer Messdrahtdurchmesser und Temperatur-Übertragungsfunktionen kann auf die momentane Temperatur des Heißgasstromes 33 geschlossen werden. Diese ergibt sich wie folgt:

$$T_{Gas}(t) = T_{TE1}(t) + \tau_{TE1}(t) * \frac{\partial T_{TE1}(t)}{\partial t} \text{ , mit}$$

$$\tau_{TE1}(t) = \frac{-(T_{TE1}(t) - T_{TE2}(t))}{\dfrac{\partial T_{TE1}(t)}{\partial t} - \alpha * \dfrac{\partial T_{TE2}(t)}{\partial t}} \text{ , mit}$$

$$\alpha = \frac{\tau_{TE2}(t)}{\tau_{TE1}(t)} = \left(\frac{d_{TE2}}{d_{TE1}}\right)^{2-m} \text{ und mit}$$

$T_{Gas}$   Gastemperatur, im vorliegenden Fall $T_{Gas} = T_{032}$

$T_{TE1}$   Temperatur TE1

$T_{TE2}$   Temperatur TE2

$\tau_{TE1}$   Zeitkonstante TE1

$\tau_{TE1}$   Zeitkonstante TE1

$d_{TE1}$   Durchmesser TE1

$d_{TE2}$   Durchmesser TE2

m   Reynolds-Exponent

t   Zeit.

Fig. 5 zeigt die schrittweise Durchführung des erfindungsgemäßen Verfahrens.

Zunächst wird in einem ersten Verfahrensschritt 34 der definierte Heißgasmassenstrom, welcher definierte zeitabhängige Druckpulsationen aufweist vorgegeben.

In einem zweiten Verfahrensschritt 35 wird die Turbine des Abgasturboladers mittels des druckpulsierenden Heißgasmassenstromes in verbrennungsmotorrelevanten Betriebsbereichen betrieben. Analog einer standardmäßigen stationären Untersuchung wird der Betriebspunkt mit Hilfe des Verdichters eingestellt.

In einem dritten Verfahrensschritt 36 werden Messgrößen des mittels des Heißgasmassenstromes betriebenen Abgasturboladers ermittelt.

In abschließenden Verfahrensschritten 37, 38 werden der momentane Wirkungsgrad der Turbine und die momentane Schnelllaufzahl der Turbine anhand der ermittelten Messgrößen errechnet sowie alle zur Erstellung von Turbinenkennfeldern relevanten Parameter bestimmt. Hiermit ist ein momentanes Turbinenkennfeld erstellbar.

Durch Variation der Turbineneintrittsparameter, können Turbinenkennfelder, die aus den quasi-stationären Druckplateaus ermittelt werden vervollständigt bzw. an die stationären Werte angebunden werden. Variablen sind beispielsweise das mittlere Turbinendruckverhältnis, die Impulsfrequenz, die Druckamplitude oder -form. Vorzugsweise werden die instationären Untersuchungen nahe der Verdichterstopfgrenze bzw. nahe der maximalen Verdichterleistung durchgeführt.

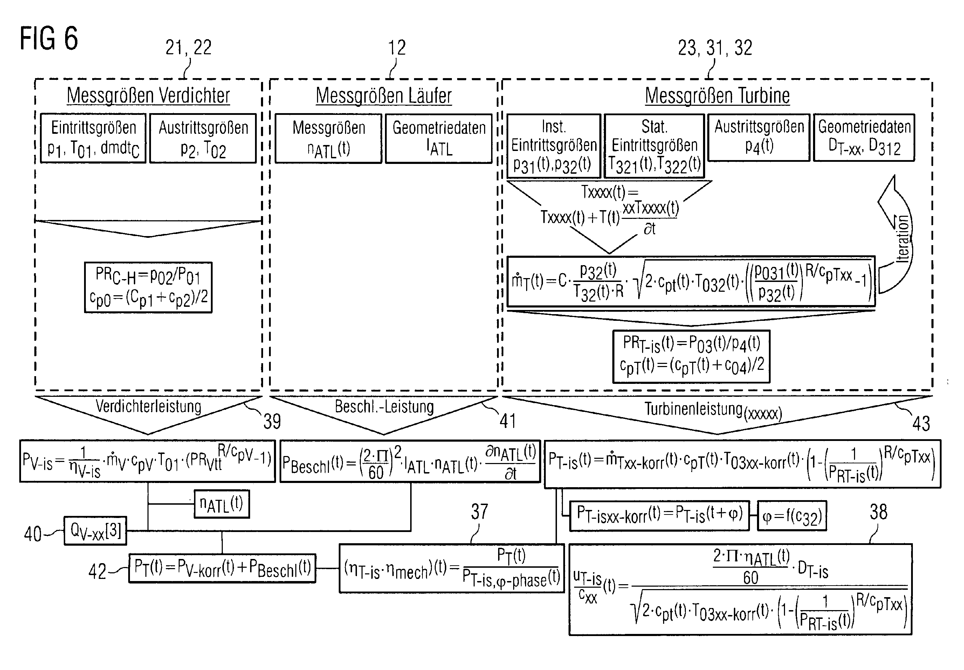

Fig. 6 zeigt die Vorgehensweise zur Ermittlung der Messgrößen des Turboladers und der Berechnung charakteristischer Kenngrößen der Turbine.

An den Messstellen 21 und 22 erfolgt wie zuvor beschrieben die Ermittlung der Messgrößen des Verdichters. Diese werden zur Berechnung 39 der Verdichterleistung und des Verdichterwirkungsgrades herangezogen. Da die Turbine einen Wärmeeintrag in den Verdichter bewirkt sind der Verdichterwirkungsgrad und die Verdichterleistung um diesen Wärmeeintrag zu korrigieren 40.

Neben der Verdichterleistung bringt die Impulsbeaufschlagung der Turbine auch eine Beschleunigungsleistung des Läufers auf. Die Messstelle 12 dient der Bestimmung der Drehzahl des Läufers. Mit den bekannten Geometriedaten des Läufers ist die erforderliche Beschleunigungsleistung des Läufers berechenbar 41.

Mittels der um den Wärmeeintrag korrigierten 40 Verdichterleistung und der Beschleunigungsleistung des Läufers ist die tatsächliche momentane Turbinenleistung errechenbar 42.

Die Messstellen 23, 31 und 32 dienen, wie bereits ausgeführt, der Ermittlung der momentanen Messgrößen der Turbine.

Mit den Messgrößen der Turbine ist die momentane isentrope Turbinenleistung errechenbar 43.

Der momentane Turbinenwirkungsgrad errechnet sich 37 aus der tatsächlichen momentanen Turbinenleistung und der momentanen isentropen Turbinenleistung.

Die Berechnung 38 der momentanen Schnelllaufzahl der Turbine erfolgt anhand der an der Messstelle 12 ermittelten Drehzahl des Läufers, den bekannten Geometriedaten des Läufers und den an den Messstellen 23, 31 und 32 ermittelten Messgrößen der Turbine.

Somit ist mittels der erhaltenen Messgrößen die momentane Schnelllaufzahl und der momentane Turbinenwirkungsgrad in verbrennungsmotorrelevanten Betriebsbereichen des Turboladers bestimmbar.

Obwohl die vorliegende Erfindung anhand bevorzugter Ausführungsbeispiele vollständig beschrieben wurde, ist sie darauf nicht beschränkt, sondern auf vielfältige Art und Weise modifizierbar. Insbesondere können Merkmale der einzelnen, oben aufgeführten Ausführungsbeispiele - sofern dies technisch sinnvoll ist - beliebig miteinander kombiniert werden.

Die aufgeführten Materialien, Zahlenangaben und Dimensionen sind beispielhaft zu verstehen und dienen lediglich der Erläuterung der Ausführungsformen und Weiterbildungen der vorliegenden Erfindung.

Das angegebene Verfahren und die Vorrichtung sind besonders vorteilhaft im Kraftfahrzeugbereich und hier vorzugsweise für Personenkraftfahrzeuge, beispielsweise bei Diesel- oder Ottomotoren, einsetzbar, lassen sich bei Bedarf allerdings auch bei beliebig anderen Turboladeranwendungen einsetzen.

**Patentansprüche**

1. Verfahren zur Untersuchung des dynamischen Betriebsverhaltens eines Abgasturboladers (18) für einen Verbrennungsmotor, mit den Schritten:

    - Vorgeben (34) eines definierten Heißgasmassenstroms, der definierte zeitabhängige Druckpulsationen aufweist,
    - Betreiben (35) einer Turbine (5) des Abgasturboladers (18) mittels des druckpulsierenden Heißgasmassenstromes in verbrennungsmotorrelevanten Betriebsbereichen,
    - Ermittlung (36) von Messgrößen des mittels des Heißgasmassenstromes betriebenen Abgasturboladers (18), wobei die Messgrößen in definierten Zeitfenstern ermittelt werden,
    - Bestimmung (37) eines momentanen Wirkungsgrades der Turbine (5) anhand der ermittelten Messgrößen,
    - Bestimmung (38) einer momentanen Schnelllaufzahl der Turbine (5) anhand der ermittelten Messgrößen, und
    - Erstellung eines momentanen Turbinenkennfeldes.

2. Verfahren nach Anspruch 1, **dadurch gekennzeichnet,**

**dass** in einem quasistationären Betriebszustand der Turbine (5) die Messgrößen lediglich während eines durch den druckpulsierenden Heißgasmassenstrom an einem Eintritt der Turbine (5) erzeugten Druckplateaus (11) ermittelt werden.

3.  Verfahren nach Anspruch 1 oder 2,
    **dadurch gekennzeichnet, dass** zum Erzeugen realistischer Betriebsbedingungen der Turbine (5) Frequenzen und/oder Amplituden und/oder Form der Druckpulsationen des Heißgasmassenstromes mittels eines Impulserzeugers (4) erzeugt werden.

4.  Verfahren nach einem der vorhergehenden Ansprüche, **dadurch gekennzeichnet, dass** der Turbolader (18) einen Verdichter (8) und einen Läufer (7, 19, 20) aufweist und dass der momentane Turbinenwirkungsgrad als Verhältnis zwischen einer tatsächlichen Turbinenleistung und einer isentropen Turbinenleistung definiert ist, wobei die tatsächliche Turbinenleistung eine Beschleunigungsleistung zur Beschleunigung des Läufers (7, 19, 20) und eine Verdichterleistung des Verdichters (8) umfasst.

5.  Verfahren nach einem der vorhergehenden Ansprüche, **dadurch gekennzeichnet, dass** als eine erste Messgröße eine an der Turbine (5) gemessene momentane Turbineneintrittstemperatur und/oder momentaner statischer Turbinenaustrittsdruck vorgesehen ist.

6.  Verfahren nach einem der vorhergehenden Ansprüche, **dadurch gekennzeichnet, dass** ein momentaner Turbinenmassenstrom mittels einer Messdüse (14) ermittelt wird, welche an einem Eintritt der Turbine (5) angeordnet ist, wobei der Turbinenmassenstrom unter Verwendung eines sich über die Messdüse (14) einstellenden Druckgefälles ermittelt wird.

7.  Verfahren nach einem der Ansprüche 4 bis 6,
    **dadurch gekennzeichnet, dass** der Abgasturbolader (18) einen Verdichter (8) mit einem Verdichterrad (20) aufweist und dass als eine zweite Messgröße eine an dem Verdichter (8) gemessene momentane Drehzahl des Verdichterrades (20) bestimmt wird.

8.  Verfahren nach Anspruch 7, **dadurch gekennzeichnet, dass** ein Kennfeld des Verdichters (8) stationär bestimmt wird und dass eine momentane Verdichterleistung entsprechend der gemessenen momentanen Drehzahl des Verdichterrades (20) und/oder dem momentanen Verdichteraustrittsdruck aus dem Kennfeld interpoliert wird.

9.  Verfahren nach Anspruch 8, **dadurch gekennzeichnet, dass** zur Bestimmung des Kennfeldes dritte Messgrößen an dem Verdichter (8) ermittelt werden, wobei zumindest eine stationäre Verdichteraustrittstemperatur, ein stationärer oder momentaner Verdichteraustrittsdruck, eine stationäre Verdichtereintrittstemperatur, ein stationärer Verdichtereintrittsdruck und ein stationärer Verdichtermassenstrom ermittelt werden.

10. Verfahren nach einem der vorhergehenden Ansprüche,
    **dadurch gekennzeichnet, dass** zur Bestimmung des momentanen Turbinenwirkungsgrades und der momentanen Schnelllaufzahl der Turbine (5) die Messgrößen automatisiert ausgewertet werden.

11. Vorrichtung, insbesondere Messleitstand, zur Durchführung eines Verfahren nach einem der vorhergehenden Ansprüche, mit:

    - Einer Heißgaserzeugungseinrichtung, die einen definierten Heißgasmassenstrom, der definierte zeitabhängige Druckpulsationen aufweist, erzeugt,
    - Einer Testeinrichtung, die die Turbine (5) mittels des definierten druckpulsierenden Heißgasmassenstromes in verbrennungsmotorrelevanten Betriebsbereichen betreibt,
    - Einer Messeinrichtung, die in definierten Zeitfenstern Messgrößen des mittels des Heißgasmassenstromes betriebenen Abgasturboladers (18) ermittelt, und
    - Einer Auswerteeinrichtung, die einen momentanen Wirkungsgrad der Turbine (5), eine momentane Schnelllaufzahl der Turbine (5) und ein momentanes Kennfeld der Turbine anhand der Messgrößen bestimmt.

12. Vorrichtung nach Anspruch 11, **dadurch gekennzeichnet, dass** die Heißgaserzeugungseinrichtung eine Brennkammer (2) zur Erzeugung von Heißgas, einen Impulserzeuger (4) zur Erzeugung der variablen Druckpulsationen und einen zwischen der Brennkammer (2) und dem Impulserzeuger (4) angeordneten Impulsdämpfer (3) zur Absicherung der Brennkammer (2) gegen die Druckpulsationen des Impulserzeugers (4) und zur Erzeugung quasi-stationärer Zustände an einem Eintritt der Turbine (5) während eines Druckstoßes, aufweist.

13. Vorrichtung nach Anspruch 11 oder 12,
   **dadurch gekennzeichnet, dass** die Testeinrichtung eine Heißgasleitung (6) aufweist, über welche das Heißgas von der Brennkammer (2) über den Impulsdämfer (3) und über den Impulserzeuger (4) zu der Turbine (5) leitbar ist.

14. Vorrichtung nach einem der Ansprüche 10 bis 13,
   **dadurch gekennzeichnet, dass** die Auswerteeinrichtung eine Recheneinheit aufweist.

FIG 1

## FIG 2A

2  3  4  6  5  1

## FIG 2B

10

11

x

9

## FIG 2C

$\times 10^5$

11

9

$p_{032}$ [Pa]

Time [sec]

# FIG 3

FIG 4A

TE1

TE2

33

FIG 4B

$T$

$T_{Gas}$

$t$

FIG 5

34

35

36

37      38

EP 2 305 959 A2

# FIG 6

21, 22  12  23, 31, 32

| Messgrößen Verdichter | Messgrößen Läufer | Messgrößen Turbine |

**Messgrößen Verdichter**

| Eintrittsgrößen $p_1$, $T_{01}$, $dmdt_C$ | Austrittsgrößen $p_2$, $T_{02}$ |

**Messgrößen Läufer**

| Messgrößen $n_{ATL}(t)$ | Geometriedaten $I_{ATL}$ |

**Messgrößen Turbine**

| Inst. Eintrittsgrößen $p_{31}(t)$, $p_{32}(t)$ | Stat. Eintrittsgrößen $T_{321}(t)$, $T_{322}(t)$ | Austrittsgrößen $p_4(t)$ | Geometriedaten $D_{T-xx}$, $D_{312}$ |

$$T_{xxxx}(t) = T_{xxxx}(t) + T(t)\frac{\partial xxT_{xxxx}(t)}{\partial t}$$

Iteration

$$PR_{C-H} = P_{02}/P_{01}$$
$$c_{p0} = (C_{p1} + c_{p2})/2$$

$$\dot{m}_T(t) = C \cdot \frac{p_{32}(t)}{T_{32}(t) \cdot R} \cdot \sqrt{2 \cdot c_{pt}(t) \cdot T_{032}(t) \cdot \left(\left(\frac{p_{031}(t)}{p_{32}(t)}\right)^{R/c_{pTxx}} - 1\right)}$$

$$PR_{T-is}(t) = P_{03}(t)/p_4(t)$$
$$c_{pT}(t) = (c_{pT}(t) + c_{04})/2$$

Verdichterleistung  39  Beschl.-Leistung  41  Turbinenleistung(xxxxx)  43

$$P_{V-is} = \frac{1}{\eta_{V-is}} \cdot \dot{m}_V \cdot c_{pV} \cdot T_{01} \cdot (PR_{Vtt}^{R/c_{pV}} - 1)$$

$$P_{Beschl}(t) = \left(\frac{2 \cdot \Pi}{60}\right)^2 \cdot I_{ATL} \cdot n_{ATL}(t) \cdot \frac{\partial n_{ATL}(t)}{\partial t}$$

$$P_{T-is}(t) = \dot{m}_{Txx-korr}(t) \cdot c_{pT}(t) \cdot T_{03xx-korr}(t) \cdot \left(1 - \left(\frac{1}{P_{RT-is}(t)}\right)^{R/c_{pTxx}}\right)$$

$n_{ATL}(t)$

$$P_{T-isxx-korr}(t) = P_{T-is}(t+\varphi) \quad \varphi = f(c_{32})$$  38

40  $Q_{V-xx}[3]$

37

42  $$P_T(t) = P_{V-korr}(t) + P_{Beschl}(t)$$

$$(\eta_{T-is} \cdot \eta_{mech})(t) = \frac{P_T(t)}{P_{T-is,\varphi-phase}(t)}$$

$$\frac{u_{T-is}}{c_{xx}}(t) = \frac{\frac{2 \cdot \Pi \cdot n_{ATL}(t)}{60} \cdot D_{T-is}}{\sqrt{2 \cdot c_{pt}(t) \cdot T_{03xx-korr}(t) \cdot \left(1 - \left(\frac{1}{P_{RT-is}(t)}\right)^{R/c_{pTxx}}\right)}}$$

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102007018618 A1